# FASCICULE DE BREVET EUROPEEN

(11) **EP 0 331 573 B1**
(45) Date de publication et mention de la délivrance du brevet: **31.08.1994**
(21) Numéro de dépôt: 89400547.9
(22) Date de dépôt: 28.02.1989
(51) Int. Cl.: H04B 7/17

(54) **Transmetteur de trains d'impulsions**
Impulsbündelsender
Pulse burst transmitter

(30) Priorité: 02.03.1988 FR 8802601
(43) Date de publication de la demande: 06.09.1989
(73) Titulaire: DEVOTEC S. A., L-1528 Luxembourg (LU)
(72) Inventeur: Saleeby, Robert W., London W9 LDN (GB)
(74) Mandataire: Flavenot, Bernard

(56) Documents cités:
- EP-A- 0 028 188
- US-A- 3 646 441
- PATENT ABSTRACTS OF JAPAN, vol. 10, no. 248 (E-431)[2304], 26 août 1986, page 8E 431 & JP-A-61 75 634

## Description

La présente invention concerne les transmetteurs de trains d'impulsions, c'est-à-dire les systèmes de transmission d'informations de proche en proche qui trouvent des applications dans de nombreux domaines, par exemple la signalisation de la proximité de véhicules en circulation, notamment pour la prévention des collisions en chaîne, la surveillance fixe de bâtiments, la transmission d'ordres télécommandés tels l'éclairage public, la climatisation, la gestion centralisée ou l'aide à la circulation, par exemple, des transports en commun, en vue, par exemple, des contrôles de passage, du positionnement des feux de circulation, etc...

On connaît déjà un transmetteur de trains d'impulsions tel que celui décrit dans le Brevet US-A-3 646 441, qui comporte un récepteur ayant une entrée apte à capter les impulsions d'un train et une sortie apte à délivrer un signal fonction de chaque impulsion captée, un émetteur ayant une première entrée d'alimentation d'émission, une seconde entrée de commande d'émission et une sortie d'émission, et des moyens pour relier la sortie du récepteur à l'entrée d'alimentation d'émission de l'émetteur.

On connaît aussi un transmetteur tel que celui décrit dans le Brevet Européen 28 188. Le dispositif décrit dans ce document comporte un récepteur normalement en service, un émetteur apte à émettre une impulsion pendant la durée de l'impulsion reçue par le récepteur et des moyens de commutation temporisés assurant la mise hors service de ce récepteur pendant une période supérieure à la durée de chaque impulsion.

Le système de transmission d'informations comporte de proche en proche une série de dispositifs tels que décrits ci-dessus comprenant un émetteur et un récepteur accordés sur une même fréquence porteuse et des moyens pour couper la possibilité de réception du récepteur dès que l'émetteur est mis en marche. Chaque dispositif peut alors recevoir une information provenant d'un autre dispositif et retransmettre cette information vers un autre dispositif ne l'ayant pas reçue.

Ce dispositif présente incontestablement l'avantage, notamment, d'éviter d'interférences entre les différents systèmes de transmission et permet ainsi de transmettre toute une série d'informations sans en occulter une partie.

Cependant, dans certaines circonstances, l'utilisation d'un tel dispositif peut être perturbée, par exemple par des impulsions parasites lorsque celles-ci ont des durées supérieures à la valeur de la constante de temps pendant laquelle le récepteur est occulté. En effet, si le récepteur reçoit une impulsion d'une durée supérieure à cette constante de temps, à l'issue de la constante de temps, le récepteur est à nouveau activé et perçoit alors la suite de l'impulsion parasite comme une impulsion d'un train qu'il a à transmettre et ceci, jusqu'à la fin de l'émission de cette impulsion parasite. De ce fait, l'émetteur émet en sortie une série d'impulsions secondaires qui correspond à un découpage en une pluralité d'impulsions de l'impulsion parasite continue. Il va s'en dire que dans un système complexe de transmission comportant une pluralité de dispositifs formant un ensemble, l'émission de telles impulsions secondaires provoquées par des impulsions parasites peut complètement perturber l'ensemble de la transmission des informations qui seront alors erronées et donc inutilisables.

La présente invention a pour but de réaliser un dispositif permettant de pallier les inconvénients des dispositifs mentionnés ci-avant.

Plus précisément, la présente invention a pour objet un transmetteur de trains d'impulsions, la durée de chaque impulsion n'excédant pas une valeur maximale, comportant un récepteur ayant une entrée apte à capter lesdites impulsions d'un train et une sortie apte à délivrer un signal fonction de chaque impulsion captée, un émetteur ayant une première entrée d'alimentation d'émission, une seconde entrée de commande d'émission et une sortie d'émission, des premiers moyens pour relier la sortie dudit récepteur à l'entrée d'alimentation d'émission dudit émetteur, caractérisé par le fait qu'il comporte en outre des seconds moyens aptes à délivrer, à partir sensiblement de l'instant de réception d'une impulsion par ledit récepteur, un signal de commande ayant une durée légèrement supérieure à la durée maximale desdites impulsions dudit train, cesdits seconds moyens reliant la sortie dudit récepteur à l'entrée de commande d'émission dudit émetteur.

D'autres caractéristiques et avantages de la présente invention apparaîtront au cours de la description suivante donnée en regard des dessins annexés à titre illustratif mais nullement limitatif, dans lesquels :
La figure 1 représente le schéma de principe d'un transmetteur selon l'invention,
La figure 2 représente un mode de réalisation plus détaillé en accord avec le schéma de principe selon la figure 1,
La figure 3 représente un ensemble de courbes sous forme de diagrammes permettant de mettre en évidence l'avantage d'un tel transmetteur par rapport à ceux de l'art antérieur.

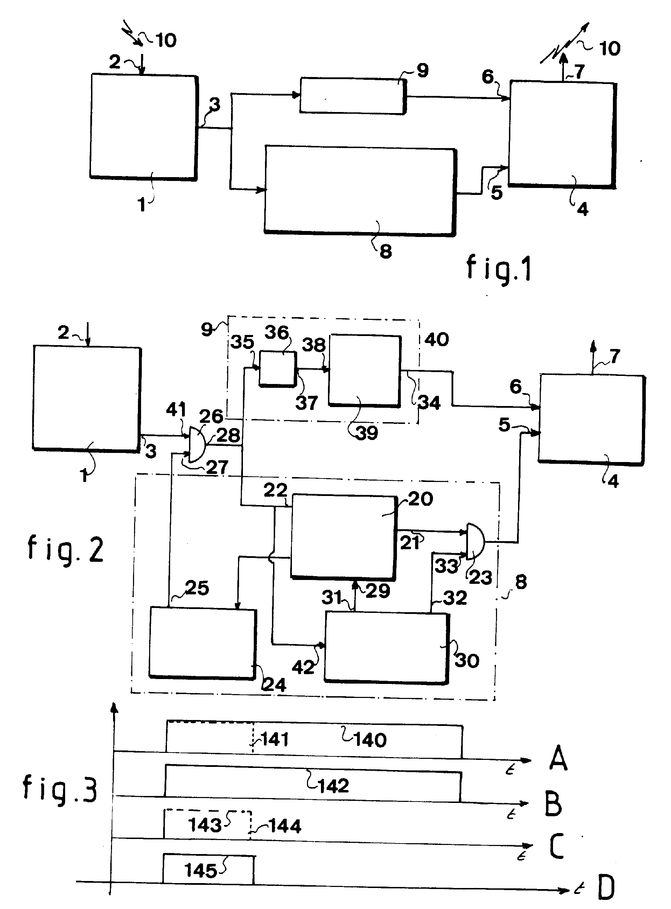

En revenant plus particulièrement à la figure 1, celle-ci représente le schéma de principe d'un transmetteur de trains d'impulsions, la durée de chaque impulsion n'excédant pas une valeur maximale, qui comporte un récepteur 1 ayant une entrée 2 apte à capter les impulsions d'un train et une sortie 3 apte à délivrer un signal fonction de chaque impulsion captée, un émetteur 4 ayant une première entrée 5 d'alimentation d'émission, une seconde entrée 6 de commande d'émission et une sortie 7 d'émission, des premiers moyens 8 pour relier la sortie 3 du récepteur à l'entrée d'alimentation 5 d'émission de l'émetteur 4, et des seconds moyens 9 aptes à délivrer, à partir sensiblement de l'instant de réception de ce flanc avant, un signal de commande ayant une durée au moins égale à la durée maximale des impulsions du train, ces seconds moyens reliant la sortie 3 du récepteur à l'entrée de commande d'émission 6 de l'émetteur 4.

Dans ce mode de réalisation, l'émetteur 4 et le récepteur 1 sont plus particulièrement destinés à la réception et à la transmission par ondes hertziennes 10. Aussi, seront-ils, de façon connue, accordés sur une même fréquence porteuse, tant pour la démodulation de la réception que pour la modulation de l'émission.

Bien entendu, l'application la plus avantageuse d'un tel dispositif est celle à la transmission par ondes hertziennes, mais cette transmission pourrait aussi bien s'effectuer par câble ou tout autre moyen.

La figure 2 représente un mode de réalisation plus détaillé du transmetteur dont le principe a été illustré sur la figure 1. Les mêmes références y désignent donc les mêmes éléments, les autres références désignant des éléments constitutifs des premiers moyens 8 et des seconds moyens 9.

Les premiers moyens 8 peuvent être constitués, par exemple, par une unité logique de traitement 20 permettant d'élaborer des trains d'impulsions en conformité avec les trains qui doivent être transmis de dispositif en dispositif. Ainsi, cette unité logique de traitement 20 comporte une sortie 21 par laquelle elle délivre un train d'impulsions ayant subi des traitements en fonction de différents paramètres pré-programmés ou pré-établis appliqués par exemple à son entrée de commande 22. Cette sortie 21 est reliée, par exemple par l'intermédiaire d'une porte "ET" 23, à l'entrée d'alimentation d'émission 5 de l'émetteur 4.

Les moyens permettant de commander le traitement dans l'unité logique peuvent être constitués par un microprocesseur 24 dont la sortie 25 est reliée à l'entrée de commande 22 de l'unité logique 20, par exemple par l'intermédiaire d'une porte "OU" 26 dont une entrée 27 est reliée à la sortie 25 du microprocesseur 24 et dont la sortie 28 est reliée à l'entrée de commande 22 de l'unité logique. La deuxième entrée 41 de la porte "OU" 26 est reliée à la sortie 3 du récepteur 1.

Une unité logique telle que l'unité logique 20 comporte généralement une entrée de synchronisation 29 recevant des impulsions élaborées, par exemple, dans un générateur 30 apte à délivrer à une sortie 31, un train d'impulsions de référence dont l'émission est commandée par une impulsion dite "de démarrage" généralement captée initialement par le récepteur 1 dont la sortie 3 est reliée par la porte "OU" 26 à son entrée de commande 42. Ce générateur 30 peut aussi élaborer, par exemple sur une deuxième sortie 32, des impulsions d'information élaborées localement et qui sont alors appliquées à la deuxième entrée 33 de la porte logique "ET" 23 précédemment décrite.

Les seconds moyens 9 aptes à délivrer à leur sortie 34, à partir sensiblement de l'instant de réception d'une impulsion par le récepteur 1, un signal de commande ayant une durée au moins égale à la durée maximale des impulsions du train, peuvent comporter, par exemple à partir de leur entrée 35, un circuit de bascule monostable 36 permettant de délivrer un signal à sa sortie 37 dès qu'à son entrée 35 est appliqué le flanc avant d'un signal dont la valeur a une variation en forme sensiblement de créneau avec un flanc avant relativement raide. Ainsi, ce circuit de bascule monostable délivre à sa sortie 37 une impulsion de durée relativement courte qui est appliquée à une entrée 38 d'un générateur de constante de temps 39 apte à délivrer à sa sortie 40 un signal de commande ayant une durée qui soit au moins égale, sinon légèrement supérieure, à la durée maximale que peuvent avoir les impulsions du train qui doit être transmis de proche en proche par un tel transmetteur. La sortie 40 de ce générateur de constante de temps est reliée à l'entrée de commande d'émission 6 de l'émetteur 4.

Dans le mode de réalisation décrit ci-dessus, les éléments du circuit fonctionnel ont été sciemment décomposés afin de les représenter séparément les uns des autres pour bien faire ressortir le caractère de la présente invention. Certains éléments pourront cependant être utilisés dans leur fonction première ou secondaire pour plusieurs alimentations d'éléments afin de minimiser la réalisation de tels circuits, ce mode opératoire étant bien connu dans le domaine de l'électronique.

L'unité logique de traitement 20 n'a pas été décrite ici en détail car elle est connue en elle-même. Le document cité dans le préambule de la présente Demande en décrit notamment un mode de réalisation possible, bien qu'il en soit connu d'autres qui puissent être appliqués dans le cadre de cette Invention. L'homme de l'art saura, avec les éléments décrits de la présente description et sans aucune difficulté, réaliser une telle unité logique en fonction des besoins et résultats qu'il doit obtenir pour la transmission de proche en proche de trains d'impulsions.

Le fonctionnement général concernant le principe de la transmission de trains d'impulsions, notamment dans le cas de bits d'informations, ne sera pas non plus explicité ici car il est, dans sa fonction première, identique à celui du transmetteur de l'art antérieur rappelé au Préambule. Par contre, les avantages du transmetteur selon l'invention seront développés ci-après en regard plus particulièrement des diagrammes de la figure 3.

On suppose, par exemple, que le récepteur capte une impulsion parasite qui a une durée supérieure à la dufée maximale possible des impulsions du train à transmettre avec un transmetteur tel que décrit ci-dessus. Cette impulsion parasite est représentée en 140 sur la figure 3, courbe A, par rapport à la durée maximale 141 d'une impulsion d'un train à transmettre. Cette impulsion 140 va être reçue par le récepteur qui va délivrer à sa sortie 3, figure 3, courbe b, une impulsion 142 qui doit avoir la même durée qu'elle.

Cette impulsion 142 émise par le récepteur 1 est simultanément appliquée aux premiers 8 et seconds 9 moyens (figures 1 et 2). Elle pourra être éventuellement traitée par les premiers moyens 8 si elle correspond à une donnée confirmée par le programme, notamment contenu dans le microprocesseur 24. Par contre, les seconds moyens 9 vont délivrer à leur sortie 34 (figure 2) un signal d'ordre 143 d'une durée légèrement supérieure à la durée maximale possible 141 d'une impulsion d'un train à transmettre, figure 3, courbe C.

Ce signal 143 est appliqué à l'entrée de commande d'émission 6 de l'émetteur 4, et la fin de son émission interdit toute émission ultérieure d'impulsion par cet émetteur, étant donné que celui-ci est inhibé dès l'apparition du flanc arrière 144 de l'impulsion de commande de l'émission. Dans ce cas, l'émetteur émettra éventuellement une impulsion 145. Cette impulsion pourra être filtrée ou éliminée, soit dans les autres transmetteurs de l'ensemble du système, soit, en final, dans l'unité centrale de traitement regroupant toutes les informations acheminées par les différents transmetteurs.

## Revendications

1. Transmetteur de trains d'impulsions, la durée de chaque impulsion n'excédant pas une valeur maximale (141), comportant un récepteur (1) ayant une entrée (2) apte à capter lesdites impulsions d'une train et une sortie (3) apte à délivrer un signal fonction de chaque impulsion captée, un émetteur (4) ayant une première entrée d'alimentation d'émission (5), une seconde entrée de commande d'émission (6) et une sortie d'émission (7), et des premiers moyens (8) pour relier la sortie dudit récepteur à l'entrée d'alimentation d'émission dudit émetteur, caractérisé par le fait qu'il comporte en outre des seconds moyens (9) aptes à délivrer, à partir de la réception d'une impulsion par ledit récepteur, un signal de commande (143) ayant une durée (144) légèrement supérieure à la durée maximale desdites impulsions dudit train, cesdits seconds moyens reliant la sortie dudit récepteur à l'entrée de commande d'émission dudit émetteur.

2. Transmetteur selon la revendication 1, caractérisé par le fait que lesdits récepteur (1) et émetteur (2) sont du type "à ondes hertziennes" accordés tous les deux sur une même fréquence porteuse.

3. Transmetteur selon l'une des revendications 1 et 2, caractérisé par le fait que les premiers moyens (8) pour relier la sortie (3) dudit récepteur (1) à l'entrée d'alimentation d'émission (5) dudit émetteur (4) comportent une unité logique de traitement (20), ladite unité logique de traitement comportant une sortie (21) apte à délivrer un train d'impulsions de traitement en fonction de paramètres donnés appliqués à son entrée de commande (22), ladite sortie (21) étant reliée, par l'intermédiaire d'une première porte logique (23), à l'entrée d'alimentation d'émission (5) de l'émetteur.

4. Transmetteur selon la revendication 3, caractérisé par le fait que ladite unité logique de traitement (20) comporte un microprocesseur (24) dont la sortie (25) est reliée à l'entrée d'alimentation (22) de l'unité logique (20), par l'intermédiaire d'une seconde porte logique (26) dont une entrée (27) est reliée à la sortie (25) du microprocesseur (24) et dont la sortie (28) est reliée à l'entrée de commande (22) de l'unité logique (20).

5. Transmetteur selon la revendication 4, caractérisé par le fait que ladite unité logique (20) comporte une entrée de synchronisation (29) recevant des impulsions élaborées par un générateur (30) apte à délivrer à une sortie (31) un train d'impulsions de référence.

6. Transmetteur selon l'une des revendications 1 à 5, caractérisé par le fait que les seconds moyens (9) aptes à délivrer, à partir de la réception d'une impulsion par ledit récepteur, un signal de commande ayant une durée légèrement supérieure à la durée maximale desdites impulsions dudit train comportent un circuit de bascule monostable (36) de mise en forme, et un générateur (39) de signal ayant une constante de temps au moins égale à la durée maximale des impulsions du train devant être transmis.

## Patentansprüche

1. Impulsfolgenumsetzer, bei dem die Dauer jedes Impulses einen Maximalwert (141) nicht übersteigt, umfassend einen Empfänger (1) mit einem Eingang (2) zum Erfassen der Impulse einer Folge und einem Ausgang (3) für das Abgeben eines Signals in Funktion jedes aufgefangenen Impulses, umfassend ferner einen Sender (4) mit einem ersten Sendespeisungseingang (5), einem zweiten Sendesteuereingang (6) und einem Sendeausgang (7) sowie umfassend erste Mittel (8) zum Verbinden des Ausgangs des Empfängers mit dem Sendespeiseeingang des Senders, **dadurch ge****kennzeichnet,** daß er ferner zweite Mittel (9) umfaßt für das Erzeugen, ausgehend vom Empfang eines Impulses durch den Empfänger, eines Steuersignals (143) mit einer Dauer (144), die etwas größer ist als die Maximaldauer der Impulse der Impulsfolge, welche zweiten Mittel den Ausgang des Empfängers mit dem Sendesteuereingang des Senders verbinden.

2. Umsetzer nach Anspruch 1, dadurch gekennzeichnet, daß der Empfänger (1) und der Sender (2) Hochfrequenzgeräte sind, denen die gleiche Trägerfrequenz zugeordnet ist.

3. Umsetzer nach einem der Ansprüche 1 und 2, dadurch gekennzeichnet, daß die ersten Mittel (8) für das Verbinden des Ausgangs (3) des Empfängers (1) mit dem Sendespeiseeingang (5) des Senders (4) eine Logikverarbeitungseinheit (20) umfassen, welche Logikverarbeitungseinheit einen Ausgang (21) aufweist für die Abgabe einer Verarbeitungsimpulsfolge in Abhängigkeit von gegebenen Parametern, die an ihren Steuereingang (22) angelegt sind, welcher Ausgang (21) über ein erstes Logikgatter (23) mit dem Sendespeiseeingang (5) des Senders verbunden ist.

4. Umsetzer nach Anspruch 3, dadurch gekennzeichnet, daß die Logikverarbeitungseinheit (20) einen Mikroprozessor (24) umfaßt, dessen Ausgang (25) mit dem Speiseeingang (22) der Logikeinheit (22) verbunden ist über ein zweites Logikgatter (26), dessen einer Eingang (27) mit dem Ausgang (25) des Mikroprozessors (24) verbunden ist und dessen Augsgang (28) mit dem Steuereingang (22) der Logikeinheit (20) verbunden ist.

5. Umsetzer nach Anspruch 4, dadurch gekennzeichnet, daß die Logikeinheit (20) einen Synchronisationseingang (29) umfaßt, an den Impulse angelegt sind, die von einem Generator (30) erzeugt werden, welcher an einem Ausgang (31) eine Referenzimpulsfolge abgibt.

6. Umsetzer nach einem der Ansprüche 1 bis 5, dadurch gekennzeichnet, daß die zweiten Mittel (9) für die Erzeugung, ausgehend vom Empfang eines Impulses durch den Empfänger, eines Steuersignals ausgebildet sind mit einer Dauer, die etwas größer ist als die Maximaldauer der Impulse der Folge, eine monostabile Kippschaltung (36) für die Impulsformung umfaßt sowie einen Signalgenerator (39) mit einer Zeitkonstante, die mindestens gleich der Maximaldauer der Impulse der Folge ist, die umzusetzen ist.

## Claims

1. A pulse train relay, the duration of each pulse not exceeding a maximum value (141), comprising a receiver (1) having an input (2) suitable for picking up said pulses of a train and an output (3) suitable for delivering a signal as a function of each picked-up pulse, a transmitter (4) having a transmission-feeding first input (5), a transmission-controlling second input (6) and a transmission output (7), and first means (8) for connecting the output of said receiver to the transmission-feeding input of said transmitter, characterized by the fact that it comprises, besides, second means (9) suitable for delivering a control pulse (143) starting on reception of a pulse by said receiver and continuing for a duration (144) which is lightly higher than the maximum duration of said pulses in said train, said second means connecting the output of said receiver to the transmission-controlling input of said transmitter.

2. A relay according to claim 1, characterized by the fact that said receiver (1) and transmitter (4) are of the radio wave type and are both tuned to the same carrier frequency.

3. A relay according to one of claims 1 and 2, characterized by the fact that the first means (8) for connecting the output (3) of said receiver (1) to the transmission-feeding input (5) of said transmitter (4) comprises a processing logic unit (20), said processing logic unit including an output (21) suitable for delivering a processing pulse train as a function of data parameters applied to a control input thereto (22), with said output (21) being connected via a first logic gate (23) to the transmission-feeding input (5) of the transmitter.

4. A relay according to claim 3, characterized by the fact that said processing logic unit (20) includes a microprocesseur (24) having an output (25) connected to the feeding input (22) of the logic unit (20) via a second logic gate (26) having an input (27) connected to said output (25) of the microprocessor (24) and its output (28) connected to the control input (22) of the logic unit (20).

5. A relay according to claim 4, characterized by the fact that said logic unit (2()) includes a synchronizing input (29) receiving pulses generated by a generator (30), said generator having an output (31) suitable for delivering a reference pulse train.

6. A relay according to one of claims 1 to 5, characterized by the fact that the second means (9) suitable for delivering a control signal starting on reception of a pulse by said receiver and continuing for a duration which is lightly higher than the maximum duration of said pulses of said train comprises a monostable shaping circuit (36), and a signal generator (39) having a time constant which is not less than the maximum duration of pulses in the train to be relayed.
